# EUROPEAN PATENT APPLICATION

(11) **EP 4 528 839 A1**
(43) Date of publication of application: **26.03.2025**
(21) Application number: 22947213.9
(22) Date of filing: 21.06.2022
(51) Int. Cl.: H01M 4/13, H01M 10/0525, H01M 10/04

(54) **ELECTROCHEMICAL APPARATUS AND ELECTRIC DEVICE**

(71) Applicant: Ningde Amperex Technology Limited, Ningde, Fujian 352100 (CN)
(72) Inventor: LIU, Xiaoqian, Ningde, Fujian 352100 (CN)
(74) Representative: Icosa
(86) International application number: PCT/CN2022/100176
(87) International publication number: WO 2023/245433

(57) **Abstract**

This application relates to an electrochemical apparatus and an electric device. The electrochemical apparatus includes a positive electrode sheet, where the positive electrode sheet includes a positive electrode current collector, a first safety layer, and a first positive electrode active material layer. The positive electrode sheet includes a first region provided with the first positive electrode active material layer. The first safety layer includes a first part located in the first region. The first part is disposed between the positive electrode current collector and the first positive electrode active material layer. When the electrochemical apparatus is in a fully charged state at 25°C, a variation coefficient δ1 of a resistance R in the first region of the positive electrode sheet is ≤ 15%. The electrochemical apparatus can have good low-temperature performance while the safety performance of the electrochemical apparatus is met.

## Description

### TECHNICAL FIELD

This application relates to the technical field of batteries, and in particular, to an electrochemical apparatus and an electric device.

### BACKGROUND

With popularity of electronic products such as notebook computers, mobile phones, and tablet computers, and rapid development of the electric vehicle industry, safety requirements for electrochemical apparatuses (for example, lithium-ion batteries) are also increasingly stringent. At present, during the use of lithium-ion batteries, there are still safety accidents such as fires and explosions caused by impact or extrusion due to external forces. In addition, in cold winter, the capacity utilization of lithium-ion batteries is limited, which further hinders the extensive application of the lithium-ion batteries.

### SUMMARY

In view of this, this application provides an electrochemical apparatus and an electric device. The electrochemical apparatus can have good low-temperature performance while the safety performance of the electrochemical apparatus is met.

According to a first aspect of this application, an electrochemical apparatus is provided, including a positive electrode sheet, where the positive electrode sheet includes a positive electrode current collector, a first safety layer, and a first positive electrode active material layer; the positive electrode sheet includes a first region provided with the first positive electrode active material layer; the first safety layer includes a first part located in the first region; and the first part is disposed between the positive electrode current collector and the first positive electrode active material layer. When the electrochemical apparatus is in a fully charged state at 25°C, a variation coefficient δ1 of a resistance R in the first region of the positive electrode sheet is ≤ 15%.

In the above technical solution, when the electrochemical apparatus is in a fully charged state at 25°C, the variation coefficient of the resistance R in the first region of the positive electrode sheet (including the first positive electrode active material layer and the first part of the first safety layer) is small. This allows the safety performance of the electrochemical apparatus to be met and allows a better transport interface to be maintained between the first safety layer and the first positive electrode active material layer, reducing the risk of the first positive electrode active material layer partially failing to be charged and discharged effectively at low temperatures, thereby improving the low-temperature performance of the electrochemical apparatus.

In some embodiments, when the electrochemical apparatus is in the fully charged state at 25°C, an average resistance R1 in the first region of the positive electrode sheet satisfies: 8 Ω/cm² ≤ R1 ≤ 100 Ω/cm². The average resistance R1 in the first region of the positive electrode sheet is within the above range, so that the safety performance of the electrochemical apparatus can be improved, and the low-temperature performance of the electrochemical apparatus can be further improved.

In some embodiments, the positive electrode sheet further includes a second region not provided with the first positive electrode active material layer; the first safety layer includes a second part located in the second region; and when the electrochemical apparatus is in the fully charged state at 25°C, a variation coefficient δ2 of a resistance R in the second region of the positive electrode sheet is ≤ 10%. In the above technical solution, the region not provided with the first positive electrode active material layer is an uncoated foil region of the positive electrode current collector. During extrusion, the uncoated foil region is prone to contact with a negative electrode, thus affecting the safety performance. The first region and the second region both include the first safety layer, so that the safety of the electrochemical apparatus can be improved, and the preparation efficiency of the positive electrode sheet is significantly improved. In addition, the variation coefficient of the resistance R in the second region of the positive electrode sheet (including the second part of the first safety layer) is small. This can reduce the risk of the second part of the first safety layer being partially uncoated, thereby reducing the risk of the uncoated foil region coming into contact with the negative electrode during extrusion, and further improving the safety performance of the electrochemical apparatus.

In some embodiments, when the electrochemical apparatus is in the fully charged state at 25°C, an average resistance R2 in the second region of the positive electrode sheet satisfies: 5 Ω/cm² ≤ R2 ≤ 100 Ω/cm². The average resistance R2 in the second region of the positive electrode sheet is within the above range, so that the safety performance of the electrochemical apparatus can be further improved, and the low-temperature performance of the electrochemical apparatus can be further improved.

In some embodiments, when the electrochemical apparatus is in the fully charged state at 25°C, the average resistance R1 in the first region of the positive electrode sheet and the average resistance R2 in the second region of the positive electrode sheet satisfy: R2/R1 ≥ 60%. In this case, the safety performance of the electrochemical apparatus can be improved.

In some embodiments, the positive electrode sheet further includes a second safety layer and a second positive electrode active material layer, where the second safety layer includes a third part located in the first region and a fourth part located in the second region; the second positive electrode active material layer includes a fifth part located in the first region and a sixth part located in the second region; the third part is disposed between the positive electrode current collector and the fifth part; and the fourth part is disposed between the positive electrode current collector and the sixth part.

In some embodiments, a thickness of the first safety layer is 0.5 µm to 10 µm. In some embodiments, a thickness of the second safety layer is 0.5 µm to 10 µm. The energy density of the electrochemical apparatus can be guaranteed, and the safety performance of the electrochemical apparatus can be improved.

In some embodiments, a diameter of an uncoated spot in the second part is ϕ; the number of uncoated spots with diameters satisfying 0.5 mm ≤ ϕ ≤ 1.5 mm does not exceed 30 per m²; the number of uncoated spots with diameters satisfying 1.5 mm < ϕ ≤ 2.5 mm does not exceed 5 per m²; and no uncoated spot with a diameter ϕ > 2.5 mm is present. A small number of uncoated spots with large diameters allow the first safety layer to be more even, thereby allowing the variation coefficient δ2 of the resistance R in the second region of the positive electrode sheet to be ≤ 10%.

In some embodiments, a material of the first safety layer includes first inorganic insulation particles, a first conductive agent, a first binder, and an optional first leveling agent. A material of the second safety layer includes second inorganic insulation particles, a second conductive agent, a second binder, and an optional second leveling agent. The first part and second part of the first safety layer both include the first inorganic insulation particles, the first conductive agent, and the first binder, so that the first safety layer can be relatively uniform, facilitating preparation of the positive electrode sheet. In addition, the second safety layer includes the second inorganic insulation particles, the second conductive agent, and the second binder, so that the safety performance of the electrochemical apparatus can be met.

In some embodiments, a specific surface area of the first inorganic insulation particles is 1 m²/g to 50 m²/g. In some embodiments, a specific surface area of the second inorganic insulation particles is 1 m²/g to 50 m²/g. Thus, the first safety layer/the second safety layer has a small number of uncoated spots.

In some embodiments, based on a mass of the first safety layer, a mass percentage of the first inorganic insulation particles is 65% to 98.9%, a mass percentage of the first binder is 1% to 20%, a mass percentage of the first conductive agent is 0.1% to 10%, and a mass percentage of the first leveling agent is 0% to 5%. The percentage of the first insulation particles is high, and the percentage of the first conductive agent is relatively low, so that the current collection is met, and the safety performance of the electrochemical apparatus can be better.

In some embodiments, based on a mass of the second safety layer, a mass percentage of the second inorganic insulation particles is 65% to 98.9%, a mass percentage of the second binder is 1% to 20%, a mass percentage of the second conductive agent is 0.1% to 10%, and a mass percentage of the second leveling agent is 0% to 5%. The percentage of the second insulation particles is high, and the percentage of the second conductive agent is relatively low, so that the current collection is met, and the safety performance of the electrochemical apparatus can be better.

In some embodiments, the first binder and/or the second binder each independently includes at least one of an olefin polymer, an acrylic polymer, an amide polymer, a fluoroolefin polymer, a carboxymethyl cellulose salt, or rubber.

In some embodiments, the first inorganic insulation particles and/or the second inorganic insulation particles each independently includes at least one of boehmite, aluminum oxide, titanium oxide, silicon oxide, magnesium oxide, hafnium oxide, tin oxide, cerium oxide, nickel oxide, zinc oxide, calcium oxide, zirconium oxide, yttrium oxide, aluminum hydroxide, magnesium hydroxide, calcium hydroxide, barium sulfate, calcium sulfate, calcium silicate, or silicon carbide.

In some embodiments, the first conductive agent and/or the second conductive agent each independently includes at least one of a particulate conductive agent, a lamellar conductive agent, a reticular conductive agent, or a fibrous conductive agent.

In some embodiments, the first leveling agent and/or the second leveling agent each independently includes at least one of an olefin derivative polymer, an acrylate salt polymer, a siloxane polymer, an acrylate ester polymer, an alcohol compound, an ether compound, or a fluorocarbon compound.

According to a first aspect of this application, an electric device is provided, including the electrochemical apparatus according to any one of these embodiments of the first aspect.

### BRIEF DESCRIPTION OF DRAWINGS

To describe the technical solutions of some embodiments of this application more clearly, the following briefly describes the accompanying drawings required for describing these embodiments. It should be understood that the accompanying drawings below show merely some embodiments of this application and thus should not be considered as limitations on the scope. Persons of ordinary skill in the art may still derive other related drawings from the accompanying drawings.
FIG. 1 is a schematic structural diagram of an electrode assembly according to some embodiments of this application;
FIG. 2 is a schematic structural diagram of a positive electrode sheet according to some embodiments of this application;
FIG. 3 is a schematic structural diagram of a wound electrode assembly according to some embodiments of this application; and
FIG. 4 is a schematic structural diagram of a negative electrode sheet according to some embodiments of this application.

Reference signs: 10. electrode assembly; 11. positive electrode sheet; 12. negative electrode sheet; 13. separator; 131. first separator; 132. second separator;
111. positive electrode current collector; 112. first safety layer; 113. first positive electrode active material layer; 114. first region; 115. second region; 1121, first part; 1122. second part; 116. second safety layer; 117. second positive electrode active material layer; 1161. third part; 1162. fourth part; 1171. fifth part; 1172. sixth part; 118. single-sided region winding terminating section;
121. second negative electrode active material layer; 122. negative electrode current collector; 123. first negative electrode active material layer; 124. third region; 125. fourth region; 126. single-sided region winding starting section; 141. positive electrode tab; and 142. negative electrode tab.

### DESCRIPTION OF EMBODIMENTS

The following describes some embodiments of technical solutions of this application in detail with reference to the accompanying drawings. The following embodiments are merely intended for a clearer description of the technical solutions of this application and therefore are used as just examples which do not constitute any limitations on the protection scope of this application.

Unless otherwise defined, meanings of all technical and scientific terms used in this specification are the same as those commonly understood by persons skilled in the art of this application. The terms used in this specification are merely intended to describe specific embodiments, but not to limit this application.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated.

In the description of some embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of some embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of these embodiments of this application rather than indicating or implying that the means or components mentioned must have specific orientations or must be constructed or manipulated according to specific orientations, and therefore shall not be construed as any limitations on these embodiments of this application.

In the description of some embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

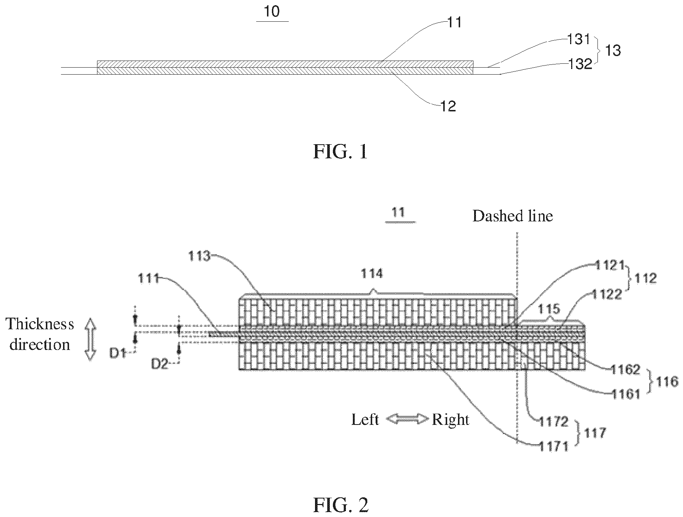

An electrochemical apparatus includes an electrode assembly and a housing, where the electrode assembly is accommodated in the housing. The electrode assembly may be a wound structure or a laminated structure. FIG. 1 is a schematic structural diagram of an electrode assembly 10 according to some embodiments of this application. Referring to FIG. 1, the electrode assembly 10 includes a positive electrode sheet 11, a negative electrode sheet 12, and a separator 13 disposed between the positive electrode sheet 11 and the negative electrode sheet 12. An electrode unit may include the positive electrode sheet 11, a first separator 131, the negative electrode sheet 12, and a second separator 132, and then this electrode unit is wound to form a wound structure. Alternatively, an electrode unit may include the positive electrode sheet 11, a first separator 131, the negative electrode sheet 12, and a second separator 132, and then a plurality of such electrode units are stacked sequentially to form a laminated structure.

The separator 13 is a component for separating the positive electrode sheet 11 from the negative electrode sheet 12. The separator 13 may be made of various materials, such as PP (polypropylene) and PE (polyethylene).

FIG. 2 is a schematic structural diagram of a positive electrode sheet 11 according to some embodiments of this application. Referring to FIG. 2, the positive electrode sheet 11 includes a positive electrode current collector 111, a first safety layer 112, and a first positive electrode active material layer 113. The positive electrode sheet 11 includes a first region 114 provided with the first positive electrode active material layer 113. The first safety layer 112 includes a first part 1121 located in the first region 114. The first part 1121 is disposed between the positive electrode current collector 111 and the first positive electrode active material layer 113. When the electrochemical apparatus is in a fully charged state at 25°C, a variation coefficient δ1 of a resistance R in the first region 114 of the positive electrode sheet 11 is ≤ 15%.

The positive electrode current collector 111 may be aluminum foil, aluminum foam, an aluminum composite current collector (which is a current collector with a polymer support layer in the middle and aluminum metal layers on two surfaces of the support layer), nickel foil, nickel foam, or the like. The first positive electrode active material layer 113 refers to a layer structure containing a positive electrode active material. The positive electrode active material may be lithium nickel cobalt manganese oxide, lithium nickel cobalt aluminum oxide, lithium cobalt oxide, lithium iron phosphate, lithium manganese oxide, or the like.

The first safety layer 112 has a specified conductivity, so that the current collection of the positive electrode current collector 111 is guaranteed, and the safety performance of the electrochemical apparatus can be improved. In addition, when the electrochemical apparatus is in the fully charged state at 25°C, the variation coefficient of the resistance R in the first region 114 of the positive electrode sheet 11 is small. This can reduce the polarization differences of various positions of the first region 114 at low temperatures, reducing the risk of the first region 114 partially failing to be charged and discharged effectively at low temperatures, thereby improving the low-temperature performance of the electrochemical apparatus.

Still referring to FIG. 2, in a thickness direction of the positive electrode sheet 11, the first region 114 includes the positive electrode current collector 111, the first part 1121 of the first safety layer 112, and the first positive electrode active material layer 113 that are stacked sequentially.

The fully charged state at 25°C of the electrochemical apparatus refers to that at 25°C, the electrochemical apparatus is charged at a constant current to a designed voltage, and then charged at the constant designed voltage to a designed cut-off current. At this point, the electrochemical apparatus reaches the fully charged state.

The variation coefficient δ1 of the resistance R in the first region 114 of the positive electrode sheet 11 refers to that the resistance in the first region 114 of the positive electrode sheet 11 is tested using a sheet resistance tester, at least 15 different points are tested, then a resistance value of a single test point is recorded as Ra, each test point has one Ra, an average of all the Ras is recorded as R1, and then a standard deviation of all the Ras is calculated and recorded as σa, with the variation coefficient δ1 = σa/R1.

For example, when the electrochemical apparatus is in the fully charged state at 25°C, the variation coefficient δ1 of the resistance R in the first region 114 of the positive electrode sheet 11 is 1%, 2%, 3%, 4%, 5%, 6%, 7%, 8%, 9%, 10%, 11%, 12%, 13%, 14%, or 15%, or may be any value within the above range.

Optionally, when the electrochemical apparatus is in the fully charged state at 25°C, the variation coefficient δ1 of the resistance R in the first region 114 of the positive electrode sheet 11 is ≤ 8%, so that the low-temperature performance of the electrochemical apparatus can be further improved. Further, the variation coefficient δ1 of the resistance R in the first region 114 of the positive electrode sheet 11 is ≤ 5%.

In some embodiments, when the electrochemical apparatus is in the fully charged state at 25°C, an average resistance R1 in the first region 114 of the positive electrode sheet 11 satisfies: 8 Ω/cm² ≤ R1 ≤ 100 Ω/cm². Resistance values of a plurality of test points in the first region 114 of the positive electrode sheet 11, tested using the above sheet resistance tester, are recorded as Ras, and an average of a plurality of Ras is recorded as R1, where 8 Ω/cm² ≤ R1 ≤ 100 Ω/cm². The average resistance R1 in the first region 114 of the positive electrode sheet 11 is within the above range, so that the safety performance of the electrochemical apparatus can be improved, and the low-temperature performance of the electrochemical apparatus can be further improved.

For example, the average resistance R1 in the first region 114 of the positive electrode sheet 11 is 8 Ω/cm², 10 Ω/cm², 15 Ω/cm², 20 Ω/cm², 30 Ω/cm², 40 Ω/cm², 50 Ω/cm², 60 Ω/cm², 70 Ω/cm², 80 Ω/cm², 90 Ω/cm², or 100 Ω/cm², or may be any value of the above range.

Optionally, the average resistance R1 in the first region 114 of the positive electrode sheet 11 satisfies: 10 Ω/cm² ≤ R1 ≤ 40 Ω/cm². The safety performance of the electrochemical apparatus can be improved, and the low-temperature performance of the electrochemical apparatus can be further improved. Further optionally, the average resistance R1 in the first region 114 of the positive electrode sheet 11 satisfies: 25 Ω/cm² ≤ R1 ≤ 32 Ω/cm².

Still referring to FIG. 2, the positive electrode sheet 11 further includes a second region 115 not provided with the first positive electrode active material layer 113. The first safety layer 112 includes a second part 1122 located in the second region 115. When the electrochemical apparatus is in the fully charged state at 25°C, a variation coefficient δ2 of a resistance R in the second region 115 of the positive electrode sheet 11 is ≤ 10%.

Still referring to FIG. 2, the positive electrode sheet 11 includes the first region 114 and the second region 115. In the thickness direction of the positive electrode sheet, the first region 114 includes the positive electrode current collector 111, the first part 1121 of the first safety layer 112, and the first positive electrode active material layer 113 that are stacked sequentially; and the second region 115 includes the positive electrode current collector 111 and the second part 1122 of the first safety layer 112 that are stacked sequentially. A dashed part in FIG. 2 can be used as a division, where a region on the left of the dashed part is the first region 114, and a region on the right of the dashed part is the second region 115.

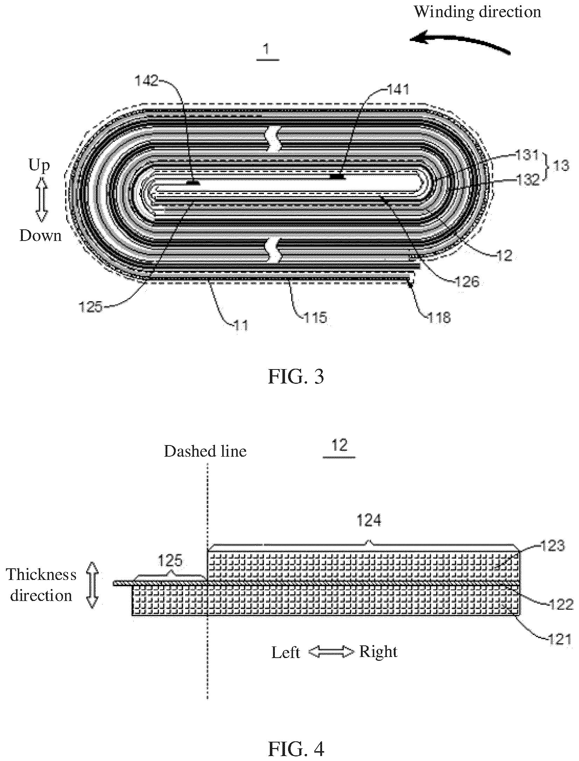

FIG. 3 is a schematic structural diagram of a wound electrode assembly 10 according to some embodiments of this application. The positive electrode sheet 11, the first separator 131, the negative electrode sheet 12, and the second separator 132 are stacked to form an electrode unit, and then this electrode unit is wound to form a wound electrode assembly 10. At this point, the second region 115 of the positive electrode sheet 11 is located on an outer turn of the wound electrode assembly 10 with respect to the first region 114. In other words, after the electrode assembly 10 is formed, the second region 115 of the positive electrode sheet 11 is a single-sided region winding terminating section 118 of the positive electrode sheet 11. Since no corresponding negative electrode active material layer is provided on a wound outer side of the second region 115 of the positive electrode sheet 11 in the wound electrode assembly 10, the first positive electrode active material layer 113 is not provided in the second region 115, so that the energy density of the electrochemical apparatus can be increased.

The single-sided region winding terminating section 118 of the positive electrode sheet 11 refers to a part in a dashed box of a position of the electrode assembly 10 away from a winding center as shown in FIG. 3. The single-sided region winding terminating section 118 of the positive electrode sheet 11 refers to that a surface of a winding terminating end of the positive electrode sheet 11 is provided with a positive electrode active material layer, and another surface opposite the surface is not provided with the positive electrode active material layer, so that the single-sided region winding terminating section 118 of the positive electrode sheet 11 is formed. When the electrode assembly 10 is formed through winding, a winding ending section of the positive electrode sheet 11 is the single-sided region winding terminating section 118 of the positive electrode sheet 11. After the electrode assembly 10 is formed, the single-sided region winding terminating section 118 of the positive electrode sheet 11 is located at a position of the electrode assembly 10 away from the winding center of the electrode assembly 10. A side, facing the center of the electrode assembly 10, of the single-sided region winding terminating section 118 of the positive electrode sheet 11 is provided with a positive electrode active material layer; and a side, facing away from the center of the electrode assembly 10, of the single-sided region winding terminating section 118 of the positive electrode sheet 11 is not provided with the positive electrode active material layer.

The second region 115 of the positive electrode sheet 11 is not provided with the first positive electrode active material layer 113. After wound, the energy density of the electrochemical apparatus can be increased. In addition, the second region 115 of the positive electrode sheet 11 is provided with the second part 1122 of the first safety layer 112, so that the safety performance of the electrochemical apparatus can be improved.

The variation coefficient δ2 of the resistance R in the second region 115 of the positive electrode sheet 11 refers to that the resistance in the second region 115 of the positive electrode sheet 11 is tested using a sheet resistance tester, at least 15 different points are tested, then a resistance value of a single test point is recorded as Rb, each test point has one Rb, an average of all the Rbs is recorded as R2, and then a standard deviation of all the Rbs is recorded as σb, with the variation coefficient δ2 = σb/R2.

For example, when the electrochemical apparatus is in the fully charged state at 25°C, the variation coefficient δ2 of the resistance R in the second region 115 of the positive electrode sheet 11 is 1%, 2%, 3%, 4%, 5%, 6%, 7%, 8%, 9%, or 10%, or may be any value within the above range.

The region not provided with the first positive electrode active material layer 113 is an uncoated foil region of the positive electrode current collector 111. During extrusion, the uncoated foil region is prone to contact with a negative electrode after broken, thus affecting the safety performance. The first region 114 and the second region 115 both include the first safety layer 112, so that the safety of the electrochemical apparatus can be improved, and the preparation efficiency of the positive electrode sheet is significantly improved. In addition, the variation coefficient δ2 of the resistance R in the second region 115 of the positive electrode sheet 11 is ≤ 10%. This can reduce the risk of the uncoated foil region coming into contact with the negative electrode during extrusion, further improving the safety performance of the electrochemical apparatus. In addition, this can further improve the low-temperature performance of the electrochemical apparatus.

Optionally, when the electrochemical apparatus is in the fully charged state at 25°C, the variation coefficient δ2 of the resistance R in the second region 115 of the positive electrode sheet 11 is ≤ 7%, so that the low-temperature performance of the electrochemical apparatus can be further improved. Further, the variation coefficient δ2 of the resistance R in the second region 115 of the positive electrode sheet 11 is ≤ 3%.

In some embodiments, when the electrochemical apparatus is in the fully charged state at 25°C, an average resistance R2 in the second region 115 of the positive electrode sheet 11 satisfies: 5 Ω/cm² ≤ R2 ≤ 100 Ω/cm². Resistance values of a plurality of test points in the second region 115 of the positive electrode sheet 11, tested using the above sheet resistance tester, are recorded as Rbs, and an average of a plurality of Rbs is recorded as R2, where 5 Ω/cm² ≤ R2 ≤ 100 Ω/cm². The average resistance R2 in the second region 115 of the positive electrode sheet 11 is within the above range, so that the safety performance of the electrochemical apparatus can be improved, and the low-temperature performance of the electrochemical apparatus can be further improved.

For example, the average resistance R2 in the second region 115 of the positive electrode sheet 11 is 5 Ω/cm², 10 Ω/cm², 15 Ω/cm², 20 Ω/cm², 30 Ω/cm², 40 Ω/cm², 50 Ω/cm², 60 Ω/cm², 70 Ω/cm², 80 Ω/cm², 90 Ω/cm², or 100 Ω/cm², or may be any value of the above range.

Optionally, the average resistance R2 in the second region 115 of the positive electrode sheet 11 satisfies: 8 Ω/cm² ≤ R2 ≤ 40 Ω/cm². The safety performance of the electrochemical apparatus can be guaranteed, and the low-temperature performance of the electrochemical apparatus can be further improved. Further optionally, the average resistance R2 in the second region 115 of the positive electrode sheet 11 satisfies: 23 Ω/cm² ≤ R2 ≤ 32 Ω/cm².

In some embodiments, when the electrochemical apparatus is in the fully charged state at 25°C, the average resistance R2 in the second region 115 of the positive electrode sheet 11 is less than the average resistance R1 in the first region 114 of the positive electrode sheet 11.

In some embodiments, when the electrochemical apparatus is in the fully charged state at 25°C, the average resistance R1 in the first region 114 of the positive electrode sheet 11 and the average resistance R2 in the second region 115 of the positive electrode sheet 11 satisfy: R2/R1 ≥ 60%. R2/R1 satisfies the above range, so that the safety performance of the electrochemical apparatus can be improved.

For example, the average resistance R1 in the first region 114 of the positive electrode sheet 11 and the average resistance R2 in the second region 115 of the positive electrode sheet 11 satisfy: R2/R1 is 60%, 65%, 70%, 75%, 80%, 85%, 90%, 95%, or 100%, or may be any value within the above range.

Optionally, the average resistance R1 in the first region 114 of the positive electrode sheet 11 and the average resistance R2 in the second region 115 of the positive electrode sheet 11 satisfy: R2/R1 ≥ 80%. The low-temperature performance of the electrochemical apparatus can be guaranteed, and the safety performance of the electrochemical apparatus can be further improved. Further optionally, the average resistance R1 in the first region 114 of the positive electrode sheet 11 and the average resistance R2 in the second region 115 of the positive electrode sheet 11 satisfy: R2/R1 ≥ 90%.

Still referring to FIG. 2, the positive electrode sheet 11 further includes a second safety layer 116 and a second positive electrode active material layer 117. The second safety layer 116 includes a third part 1161 located in the first region 114 and a fourth part 1162 located in the second region 115. The second positive electrode active material layer 117 includes a fifth part 1171 located in the first region 114 and a sixth part 1172 located in the second region 115. The third part 1161 is disposed between the positive electrode current collector 111 and the fifth part 1171. The fourth part 1162 is disposed between the positive electrode current collector 111 and the sixth part 1172.

Still referring to FIG. 2, the first positive electrode active material layer 113 and the second positive electrode active material layer 117 are respectively provided on two surfaces of the positive electrode current collector 111. The first positive electrode active material layer 113 is provided on an upper surface of the positive electrode current collector 111 and partially covers the first safety layer 112. The second positive electrode active material layer 117 is provided on a lower surface of the positive electrode current collector 111. A projection of the second positive electrode active material layer 117 on the positive electrode current collector 111 extends to the right beyond a projection of the first positive electrode active material layer 113 on the positive electrode current collector 111.

Still referring to FIG. 2, the positive electrode sheet 11 includes the first region 114 and the second region 115. In the thickness direction of the positive electrode sheet 11, the first region 114 includes the fifth part 1171 of the second positive electrode active material layer 117, the third part 1161 of the second safety layer 116, the positive electrode current collector 111, the first part 1121 of the first safety layer 112, and the first positive electrode active material layer 113 that are stacked sequentially. The second region 115 includes the sixth part 1172 of the second positive electrode active material layer 117, the fourth part 1162 of the second safety layer 116, the positive electrode current collector 111, and the second part 1122 of the first safety layer 112 that are stacked sequentially. A dashed part in FIG. 2 can be used as a division, where a region on the left of the dashed part is the first region 114, and a region on the right of the dashed part is the second region 115.

Still referring to FIG. 3, after the wound electrode assembly 10 is formed, the single-sided region winding terminating section 118 of the positive electrode sheet 11 is located at a position of the electrode assembly 10 away from the winding center of the electrode assembly 10. A surface of the single-sided region winding terminating section 118 of the positive electrode sheet 11 (a surface facing the center of the electrode assembly 10) is provided with the second positive electrode active material layer 117, and another surface (a surface facing away from the center of the electrode assembly 10) is not provided with the first positive electrode active material layer 113.

The first region 114 and second region 115 of the positive electrode sheet are each provided with the second safety layer 116 and the second positive electrode active material layer 117, so that the energy density of the electrochemical apparatus can be increased, and the safety performance and low-temperature performance can also be met.

In some embodiments, a thickness of the first safety layer is 0.5 µm to 10 µm. The energy density of the electrochemical apparatus can be guaranteed, and the safety performance of the electrochemical apparatus can be improved.

Still referring to FIG. 2, the thickness of the first safety layer 112 is D1, where D1 may be 0.5 µm, 1 µm, 2 µm, 3 µm, 4 µm, 5 µm, 6 µm, 7 µm, 8 µm, 9 µm, or 10 µm, or may be any value within the above range.

Optionally, the thickness of the first safety layer 112 is 2 µm to 5 µm, so that the safety performance of the electrochemical apparatus can be further improved. In some embodiments, the thickness of the first safety layer 112 is 2 µm to 4 µm.

In some embodiments, a thickness of the second safety layer is 0.5 µm to 10 µm. The energy density of the electrochemical apparatus can be guaranteed, and the safety performance of the electrochemical apparatus can be improved.

Still referring to FIG. 2, the thickness of the second safety layer 116 is D2, where D2 may be 0.5 µm, 1 µm, 2 µm, 3 µm, 4 µm, 5 µm, 6 µm, 7 µm, 8 µm, 9 µm, or 10 µm, or may be any value within the above range. Optionally, the thickness D1 of the first safety layer 112 and the thickness D2 of the second safety layer 116 may be the same or different.

In some embodiments, a diameter of an uncoated spot in the second part 1122 is ϕ; the number of uncoated spots with diameters satisfying 0.5 mm ≤ ϕ ≤ 1.5 mm does not exceed 30 per m²; the number of uncoated spots with diameters satisfying 1.5 mm < ϕ ≤ 2.5 mm does not exceed 5 per m²; and no uncoated spot with a diameter ϕ > 2.5 mm is present. A small number of uncoated spots with large diameters allow the first safety layer 112 to be more even, easily allowing the variation coefficient δ2 of the resistance R in the second region 115 to be ≤ 10%, thereby allowing for a better improvement effect on the low-temperature performance while meeting the safety performance of the electrochemical apparatus.

When the first safety layer 112 is formed through coating, due to differences in component dispersibility, interfacial tension, coating thickness, and the like, uncoated spots may be formed in the second part 1122 of the first safety layer 112 after a coating is dried. For example, under otherwise identical conditions, a larger thickness of the coating correspondingly leads to a smaller number of uncoated spots and smaller diameters of the uncoated spots in the second part 1122 of the first safety layer 112. A smaller thickness of the coating correspondingly leads to a larger number of uncoated spots and larger diameters of the uncoated spots in the second part 1122 of the first safety layer 112. The uncoated spots may have regular circular structures, but more likely, the uncoated spots are irregularly shaped. A diameter of an uncoated spot refers to an average of a maximum diameter and minimum diameter of the uncoated spot.

The diameter of the uncoated spot in the second part 1122 is ϕ. The number of uncoated spots with diameters satisfying 0.5 mm ≤ ϕ ≤ 1.5 mm may be 0 per m², 2 per m², 4 per m², 8 per m², 12 per m², 16 per m², 20 per m², 25 per m², or 30 per m², or may be any value within the above range. The number of uncoated spots with diameters satisfying 1.5 mm < ϕ ≤ 2.5 mm may be 0 per m², 1 per m², 2 per m², 3 per m², 4 per m², or 5 per m², or may be any value within the above range. No uncoated spot with a diameter ϕ > 2.5 mm is present.

Optionally, the diameter of the uncoated spot in the second part 1122 is ϕ. The number of uncoated spots with diameters satisfying 0.5 mm ≤ ϕ ≤ 1.5 mm does not exceed 10 per m². The number of uncoated spots with diameters satisfying 1.5 mm < ϕ ≤ 2.5 mm does not exceed 2 per m². No uncoated spot with a diameter ϕ > 2.5 mm is present.

In some embodiments, a material of the first safety layer 112 includes first inorganic insulation particles, a first conductive agent, a first binder, and an optional first leveling agent. A material of the second safety layer 116 includes second inorganic insulation particles, a second conductive agent, a second binder, and an optional second leveling agent. The inorganic insulation particles, the conductive agent, the binder, and the optional leveling agent are mixed to form a slurry. The slurry can be applied on two surfaces of the positive electrode current collector 111 to form the first safety layer 112 and the second safety layer 116, so as to improve the safety performance of the electrochemical apparatus.

The first part 1121 and second part 1122 of the first safety layer 112 both include the first inorganic insulation particles, the first conductive agent, and the first binder, so that the first safety layer 112 can be relatively uniform, facilitating preparation of the positive electrode sheet 11. In addition, the second safety layer 116 includes the second inorganic insulation particles, the second conductive agent, and the second binder, so that the safety performance of the electrochemical apparatus can be met.

In some embodiments, a specific surface area of the first inorganic insulation particles in the first safety layer 112 is 1 m²/g to 50 m²/g. The specific surface area of the first inorganic insulation particles being within the above range allows for a small number of uncoated spots in the second part 1122 of the first safety layer 112 and also allows the slurry to be relatively uniform, thereby avoiding agglomeration. In this way, when the electrochemical apparatus is in the fully charged state at 25°C, the variation coefficient δ1 of the resistance R in the first region 114 of the positive electrode sheet 11 is ≤ 15%, and the variation coefficient δ2 of the resistance R in the second region 115 of the positive electrode sheet 11 is ≤ 10%. Thus, the electrochemical apparatus can have better safety performance and low-temperature performance.

For example, the specific surface area of the first inorganic insulation particles in the first safety layer 112 is 1 m²/g, 2 m²/g, 3 m²/g, 5 m²/g, 10 m²/g, 15 m²/g, 20 m²/g, 30 m²/g, 40 m²/g, or 50 m²/g, or may be any value within the above range. Optionally, the specific surface area of the first inorganic insulation particles in the first safety layer 112 is 5 m²/g to 20 m²/g.

In some embodiments, a specific surface area of the second inorganic insulation particles in the second safety layer 116 is 1 m²/g to 50 m²/g. The specific surface area of the second inorganic insulation particles being within the above range allows for a small number of uncoated spots in the second safety layer 116 and also allows the slurry to be relatively uniform, thereby avoiding agglomeration. Thus, the electrochemical apparatus can have better safety performance and low-temperature performance.

For example, the specific surface area of the second inorganic insulation particles in the second safety layer 116 is 1 m²/g, 2 m²/g, 3 m²/g, 5 m²/g, 10 m²/g, 15 m²/g, 20 m²/g, 30 m²/g, 40 m²/g, or 50 m²/g, or may be any value within the above range. Optionally, the specific surface area of the second inorganic insulation particles in the second safety layer 116 is 5 m²/g to 20 m²/g. The specific surface area of the first inorganic insulation particles and the specific surface area of the second inorganic insulation particles may be the same or different.

In some embodiments, based on a mass of the first safety layer 112, a mass percentage of the first inorganic insulation particles is 65% to 98.9%, a mass percentage of the first binder is 1% to 20%, a mass percentage of the first conductive agent is 0.1% to 10%, and a mass percentage of the first leveling agent is 0% to 5%.

For example, based on the mass of the first safety layer 112, the mass percentage of the first inorganic insulation particles is 65%, 70%, 75%, 80%, 85%, 90%, 95%, or 98.9%, or may be any value within the above range. The mass percentage of the first binder is 1%, 3%, 5%, 10%, 15%, or 20%, or may be any value within the above range. The mass percentage of the first conductive agent is 0.1%, 0.3%, 0.5%, 1%, 3%, 5%, or 10%, or may be any value within the above range. The mass percentage of the first leveling agent is 0%, 1%, 2%, 3%, 4%, or 5%, or may be any value within the above range.

The percentage of the first insulation particles is high, and the percentage of the first conductive agent is relatively low, so that the current collection is met, and the safety performance can be better.

In some embodiments, based on a mass of the second safety layer 116, a mass percentage of the second inorganic insulation particles is 65% to 98.9%, a mass percentage of the second binder is 1% to 20%, a mass percentage of the second conductive agent is 0.1% to 10%, and a mass percentage of the second leveling agent is 0% to 5%.

For example, based on the mass of the second safety layer 116, the mass percentage of the second inorganic insulation particles is 65%, 70%, 75%, 80%, 85%, 90%, 95%, or 98.9%, or may be any value within the above range. The mass percentage of the second binder is 1%, 3%, 5%, 10%, 15%, or 20%, or may be any value within the above range. The mass percentage of the second conductive agent is 0.1%, 0.3%, 0.5%, 1%, 3%, 5%, or 10%, or may be any value within the above range. The mass percentage of the second leveling agent is 0%, 1%, 2%, 3%, 4%, or 5%, or may be any value within the above range.

The percentage of the second insulation particles is high, and the percentage of the second conductive agent is relatively low, so that the current collection is met, and the safety performance of the electrochemical apparatus can be better.

In some embodiments, the first binder and/or the second binder each independently includes at least one of an olefin polymer, an acrylic polymer, an amide polymer, a fluoroolefin polymer, a carboxymethyl cellulose salt, or rubber. The material of the first binder and the material of the second binder may be the same or different.

In some embodiments, the first inorganic insulation particles and/or the second inorganic insulation particles each independently includes at least one of boehmite, aluminum oxide, titanium oxide, silicon oxide, magnesium oxide, hafnium oxide, tin oxide, cerium oxide, nickel oxide, zinc oxide, calcium oxide, zirconium oxide, yttrium oxide, aluminum hydroxide, magnesium hydroxide, calcium hydroxide, barium sulfate, calcium sulfate, calcium silicate, or silicon carbide. The material of the first inorganic insulation particles and the material of the second inorganic insulation particles may be the same or different.

In some embodiments, the first conductive agent and/or the second conductive agent each independently includes at least one of a particulate conductive agent, a lamellar conductive agent, a reticular conductive agent, or a fibrous conductive agent. The shape of the first conductive agent and the shape of the second conductive agent may be the same or different.

The first conductive agent and/or the second conductive agent each independently includes at least one of conductive carbon black, carbon fiber, carbon nanotubes, Ketjen black, graphene, or acetylene black. The material of the first conductive agent and the material of the second conductive agent may be the same or different.

In some embodiments, the first leveling agent and/or the second leveling agent each independently includes at least one of an olefin derivative polymer, an acrylate salt polymer, a siloxane polymer, an acrylate ester polymer, an alcohol compound, an ether compound, or a fluorocarbon compound. The material of the first leveling agent and the material of the second leveling agent may be the same or different.

FIG. 4 is a schematic structural diagram of a negative electrode sheet 12 according to some embodiments of this application. Referring to FIG. 4, the negative electrode sheet 12 includes a second negative electrode active material layer 121, a negative electrode current collector 122, and a first negative electrode active material layer 123 that are stacked sequentially along a thickness direction. The negative electrode sheet 12 includes a third region 124 provided with the first negative electrode active material layer 123 and a fourth region 125 not provided with the first negative electrode active material layer 123. A dashed part in FIG. 4 can be used as a division, where a region on the right of the dashed part is the third region 124, and a region on the left of the dashed part is the fourth region 125. The third region 124 and the fourth region 125 are each provided with the second negative electrode active material layer 121.

Still referring to FIG. 4, the first negative electrode active material layer 123 and the second negative electrode active material layer 121 are respectively provided on two surfaces of the negative electrode current collector 122. The first negative electrode active material layer 123 is provided on an upper surface of the negative electrode current collector 122. The second negative electrode active material layer 121 is provided on a lower surface of the negative electrode current collector 122. A projection of the second negative electrode active material layer 121 on the negative electrode current collector 122 extends to the left beyond a projection of the first negative electrode active material layer 123 on the negative electrode current collector 122.

For example, the negative electrode current collector 122 may be copper foil, copper foam, a copper composite current collector (which is a current collector with a polymer support layer in the middle and copper metal layers on two surfaces of the support layer), nickel foil, nickel foam, or the like. The negative electrode active material layer refers to a layer structure containing a negative electrode active material. The negative electrode active material may be graphite, silicon, or the like.

Still referring to FIG. 3, the positive electrode sheet 11, the first separator 131, the negative electrode sheet 12, and the second separator 132 are stacked to form an electrode unit, and then this electrode unit is wound to form a wound electrode assembly 10. At this point, the fourth region 125 of the negative electrode sheet 12 is located on an inner turn of the wound electrode assembly 10 with respect to the third region 124. In other words, after the electrode assembly 10 is formed, the fourth region 125 of the negative electrode sheet 12 is a single-sided region winding starting section 126 of the negative electrode sheet 12. Since no corresponding positive electrode active material layer is provided on a wound inner side of the fourth region 125 of the negative electrode sheet 12 in the wound electrode assembly 10, the first negative electrode active material layer 123 is not provided in the fourth region 125, so that the energy density of the electrochemical apparatus can be increased.

The single-sided region winding starting section 126 of the negative electrode sheet 12 refers to a part in a dashed box of a position of the electrode assembly 10 close to a winding center as shown in FIG. 3. The single-sided region winding starting section 126 of the negative electrode sheet 12 refers to that a surface of a winding starting end of the negative electrode sheet 12 is provided with a negative electrode active material layer, and another surface opposite the surface is not provided with the negative electrode active material layer, so that the single-sided region winding starting section 126 of the negative electrode sheet 12 is formed. Particularly, the single-sided region winding starting section 126 of the negative electrode sheet 12 may be further provided with a negative electrode current collector 122 section, on two surfaces of which the negative electrode active material layer is not provided. When the electrode assembly 10 is formed through winding, a winding starting section of the negative electrode sheet 12 is provided with the single-sided region winding starting section 126 of the negative electrode sheet 12. After the electrode assembly 10 is formed, the single-sided region winding starting section 126 of the negative electrode sheet 12 is located at a position of the electrode assembly 10 close to the winding center of the electrode assembly 10. A side, facing the center of the electrode assembly 10, of the single-sided region winding starting section 126 of the negative electrode sheet 12 is not provided with the negative electrode active material layer; and a side, facing away from the center of the electrode assembly 10, of the single-sided region winding starting section 126 of the negative electrode sheet 12 is provided with the negative electrode active material layer.

Still referring to FIG. 3, the electrode assembly 10 further includes a positive electrode tab 141 and a negative electrode tab 142. The positive electrode tab 141 is disposed on a side of the positive electrode sheet 11 and electrically connected to the positive electrode current collector 111. The negative electrode tab 142 is disposed on a side of the negative electrode sheet 12 and electrically connected to the negative electrode current collector 122. The positive electrode tab 141 and the negative electrode tab 142 are disposed to output current.

In some embodiments, still referring to FIG. 2 and FIG. 3, the electrochemical apparatus includes the wound electrode assembly 10 formed by stacking and then winding the positive electrode sheet 11, the first separator 131, the negative electrode sheet 12, and the second separator 132. The positive electrode sheet 11 includes the second positive electrode active material layer 117, the second safety layer 116, the positive electrode current collector 111, the first safety layer 112, and the first positive electrode active material layer 113. The positive electrode sheet 11 includes the first region 114 provided with the first positive electrode active material layer 113. The first safety layer 112 includes the first part 1121 located in the first region 114. The first part 1121 is disposed between the positive electrode current collector 111 and the first positive electrode active material layer 113. When the electrochemical apparatus is in the fully charged state at 25°C, the variation coefficient δ1 of the resistance R in the first region 114 of the positive electrode sheet 11 is ≤ 15%. The positive electrode sheet 11 further includes the second region 115 not provided with the first positive electrode active material layer 113. The first safety layer 112 includes the second part 1122 located in the second region 115. When the electrochemical apparatus is in the fully charged state at 25°C, the variation coefficient δ2 of the resistance R in the second region 115 of the positive electrode sheet 11 is ≤ 10%. The second safety layer 116 includes the third part 1161 located in the first region 114 and the fourth part 1162 located in the second region 115. The second positive electrode active material layer 117 includes the fifth part 1171 located in the first region 114 and the sixth part 1172 located in the second region 115. The second region 115 of the positive electrode sheet 11 is located on the outer turn of the wound electrode assembly 10 with respect to the first region 114, and the second part 1122 of the first safety layer 112 is located on a side of the positive electrode sheet 11 facing away from the center of the wound electrode assembly 10.

In these embodiments, the electrochemical apparatus includes the above positive electrode sheet 11, so that the electrochemical apparatus can have better safety performance and low-temperature performance, and the electrochemical apparatus can have higher energy density.

According to a second aspect of this application, an electric device is provided, including the electrochemical apparatus as described above.

In some embodiments, the electric device may include but is not limited to a mobile phone, a notebook computer, a headphone, a video recorder, a calculator, a vehicle, a ship, a spacecraft, an electric tool, and an electric toy. These embodiments of this application impose no special limitation on the above electric device.

The following further describes the technical solutions of this application in detail with reference to examples and comparative examples. However, it should be understood that the following examples are merely illustrative and these embodiments of this application are not limited thereto.

### Examples

### Preparation of negative electrode sheet:

A negative electrode active material graphite particles, a conductive agent Super P, a binder styrene-butadiene rubber, and a thickener sodium carboxymethyl cellulose were stirred and mixed well in deionized water at a mass ratio of 95:2:2:1 to obtain a negative electrode slurry. As shown in FIG. 4, the negative electrode slurry was applied on a surface of a 6 µm copper foil current collector and dried, and then the negative electrode slurry was also applied on another surface of the copper foil current collector and dried. After cold pressing, a negative electrode sheet with a first negative electrode active material layer 123 and a second negative electrode active material layer 121 was obtained.

### Preparation of positive electrode sheet:

In a first step, a positive electrode slurry was prepared as follows: A positive electrode active material LiCoO₂ particles, a conductive agent Super P, carbon nanotubes, and a binder polyvinylidene fluoride were stirred and mixed well in N-methylpyrrolidone at a mass ratio of 97.3:0.6:0.5:1.6 to obtain the positive electrode slurry.

In a second step, a safety layer slurry was prepared as follows: Inorganic insulation particles, a binder, a conductive agent, and an optional leveling agent were added in water and then mixed well to obtain the safety layer slurry.

In a third step, as shown in FIG. 2, the safety layer slurry was applied on a surface of a 9 µm aluminum foil current collector and dried to obtain a first safety layer 112; and still as shown in FIG. 2, the safety layer slurry was applied on another surface of the aluminum foil current collector to obtain a second safety layer 116.

In a fourth step, as shown in FIG. 2, the positive electrode slurry was applied on the first safety layer 112 and dried to form a first positive electrode active material layer 113; and still as shown in FIG. 2, the positive electrode slurry was applied on the second safety layer 116 and dried to form a second positive electrode active material layer 117. After cold pressing, a positive electrode sheet was obtained. The thicknesses of the first positive electrode active material layer 113 and the second positive electrode active material layer 117 were both 50 µm.

### Preparation of electrode assembly 10:

A polyethylene porous polymer film was used as a separator 13.

A positive electrode sheet 11, a first separator 131, a negative electrode sheet 12, and a second separator 132 were stacked and then wound in a manner as shown in FIG. 3 to form an electrode assembly 10. A fourth region 125 of the negative electrode sheet 12 was located on the innermost turn of the electrode assembly 10; and a side of the fourth region 125 of the negative electrode sheet 12, not provided with a negative electrode active material layer, faced the center of the electrode assembly 10. A second region 115 of the positive electrode sheet 11 was located on the outer turn of the electrode assembly 10; and a side of the second region 115 of the positive electrode sheet 11, not provided with a positive electrode active material layer, faced away from the center of the electrode assembly 10.

### Preparation of lithium-ion battery:

The wound electrode assembly 10 was placed in an aluminum-plastic film. Then, an electrolyte solution was injected and packaging was performed, followed by processes such as formation, degassing, and trimming to obtain a lithium-ion battery. The electrolyte solution was prepared in the following method: In an argon atmosphere glove box with a moisture content < 10 ppm, ethylene carbonate (EC for short), diethyl carbonate (DEC for short), and propylene carbonate (PC for short) were mixed well at a weight ratio of 2:6:2. Then, a fully dried lithium salt LiPF₆ was dissolved in the above solvent, and 1,3-propane sultone, fluoroethylene carbonate, and adiponitrile were added, so that the electrolyte solution was obtained. A percentage of LiPF₆ was 12.5%, a percentage of 1,3-propane sultone was 1.5%, a percentage of fluoroethylene carbonate was 3%, and a percentage of adiponitrile was 2%, where the percentages of the substances were calculated based on a total weight of the electrolyte solution.

The parameters of the positive electrode sheet are described below in detail in Table 1.

**Table 1 Parameters of positive electrode sheet**

| | BET of inorganic insulation particles (m²·g⁻¹) | Safety layer | | | | |
|---|---|---|---|---|---|---|
| | | Inorganic insulation material | Binder | Leveling agent | Conductive agent | Thickness of first/second safety layer (µm) |
| Comparative example 1 | No safety layer | | | | | |
| Comparative example 2 | 0.5 | 82.8% **boehmite** | 15% (45% acrylonitrile + 45% lithium acrylate + 10% acrylamide) polymer | 0.2% ethoxy ethylene-propoxy propylene copolymer | 2.5% SP | 10 |
| Comparative example 3 | 50 | 82.8% boehmite | 15% (45% acrylonitrile + 45% lithium acrylate + 10% acrylamide) polymer | 0.2% ethoxy ethylene-propoxy propylene copolymer | 1% SP | 0.5 |
| Example 1 | 7 | 81.8% boehmite | 15% (45% acrylonitrile + 45% lithium acrylate + 10% acrylamide) polymer | 0.2% ethoxy ethylene-propoxy propylene copolymer | 5% SP | 3 |
| Example 2 | 1 | 90.3% boehmite | 8% (45% acrylonitrile + 45% lithium acrylate + 10% acrylamide) polymer | 0.2% ethoxy ethylene-propoxy propylene copolymer | 1.5% SP | 4 |
| Example 3 | 5 | 90.3% boehmite | 8% (45% acrylonitrile + 45% lithium acrylate + 10% acrylamide) polymer | 0.2% ethoxy ethylene-propoxy propylene copolymer | 1.5% SP | 4 |
| Example 4 | 7 | 90.3% boehmite | 8% (45% acrylonitrile + 45% lithium acrylate + 10% acrylamide) polymer | 0.2% ethoxy ethylene-propoxy propylene copolymer | 1.5% SP | 4 |
| Example 5 | 10 | 90.3% boehmite | 8% (45% acrylonitrile + 45% lithium acrylate + 10% acrylamide) polymer | 0.2% ethoxy ethylene-propoxy propylene copolymer | 1.5% SP | 4 |
| Example 6 | 15 | 90.3% boehmite | 8% (45% acrylonitrile + 45% lithium acrylate + 10% acrylamide) polymer | 0.2% ethoxy ethylene-propoxy propylene copolymer | 1.5% SP | 4 |
| Example 7 | 20 | 91% boehmite | 8% (45% acrylonitrile + 45% lithium acrylate + 10% acrylamide) polymer | 0.2% ethoxy ethylene-propoxy propylene copolymer | 0.8% SP | 2 |
| Example 8 | 30 | 91.3% boehmite | 8% (45% acrylonitrile + 45% lithium acrylate + 10% acrylamide) polymer | 0.2% ethoxy ethylene-propoxy propylene copolymer | 0.5% SP | 1 |
| Example 9 | 40 | 84.3% boehmite | 15% (45% acrylonitrile + 45% lithium acrylate + 10% acrylamide) polymer | 0.2% ethoxy ethylene-propoxy propylene copolymer | 0.5% SP | 0.5 |
| Example 10 | 7 | 98.9% boehmite | 1% lithium carboxymethyl cellulose | \ | 0.1% reticular graphite fiber | 8 |
| Example 11 | 7 | 90.8% boehmite | 5% (45% acrylonitrile + 45% lithium acrylate + 10% acrylamide) polymer | 0.2% ethoxy ethylene-propoxy propylene copolymer | 0.8% CNT | 5 |
| Example 12 | 7 | 90.6% boehmite | 8% (45% acrylonitrile + 45% lithium acrylate + 10% acrylamide) polymer | 0.2% ethoxy ethylene-propoxy propylene copolymer | 1.0% SP + 0.2% CNT | 4 |
| Example 13 | 7 | 89.8% boehmite | 8% (45% acrylonitrile + 45% lithium acrylate + 10% acrylamide) polymer | 0.2% ethoxy ethylene-propoxy propylene copolymer | 2.0% SP | 4 |
| Example 14 | 7 | 90.2% boehmite | 8% (45% acrylonitrile + 45% lithium acrylate + 10% acrylamide) polymer | 0.2% ethoxy ethylene-propoxy propylene copolymer | 1.6% Ketjen black | 4 |
| Example 15 | 7 | 89.4% boehmite | 8% (45% acrylonitrile + 45% lithium acrylate + 10% acrylamide) polymer | 0.2% ethoxy ethylene-propoxy propylene copolymer | 1.7% SP + 0.5% CNT | 4 |
| Example 16 | 7 | 89.1% boehmite | 8% (45% acrylonitrile + 45% lithium acrylate + 10% acrylamide) polymer | 0.2% ethoxy ethylene-propoxy propylene copolymer | 2.7% SP | 4 |
| Example 17 | 7 | 88.6% boehmite | 8% (45% acrylonitrile + 45% lithium acrylate + 10% acrylamide) polymer | 0.2% ethoxy ethylene-propoxy propylene copolymer | 3.2% SP | 4 |
| Example 18 | 7 | 88.9% boehmite | 8% (45% acrylonitrile + 45% lithium acrylate + 10% acrylamide) polymer | 0.2% ethoxy ethylene-propoxy propylene copolymer | 2.0% SP + 0.9% CNT | 4 |
| Example 19 | 7 | 86.3% boehmite | 10% (45% acrylonitrile + 45% lithium acrylate + 10% acrylamide) polymer | 0.2% ethoxy ethylene-propoxy propylene copolymer | 3.5% SP + 0.2% GN | 6 |
| Example 20 | 7 | 77.2% boehmite | 15% (45% acrylonitrile + 45% lithium acrylate + 10% acrylamide) polymer | 0.1% polydimethylsiloxane | 6.5% SP + 1.2% graphite fiber | 10 |
| Example 21 | 7 | 90.3% boehmite | 8% polyacrylic acid | 0.2% ethoxy ethylene-propoxy propylene copolymer | 1.5% SP | 4 |
| Example 22 | 7 | 88.3% boehmite | 8% (45% acrylonitrile + 45% lithium acrylate + 10% acrylamide) polymer, 2% polyacrylic acid | 0.2% fluorocarbon modified polyacrylate | 1.5% SP | 4 |
| Example 23 | 7 | 90.3% calcium sulfate | 8% (45% acrylonitrile + 45% lithium acrylate + 10% acrylamide) polymer | 0.2% ethoxy ethylene-propoxy propylene copolymer | 1.5% SP | 4 |
| Example 24 | 7 | 90.3% calcium silicate | 8% (45% acrylonitrile + 45% lithium acrylate + 10% acrylamide) polymer | 0.2% ethoxy ethylene-propoxy propylene copolymer | 1.5% SP | 4 |

### Test methods:

### (1) Specific surface area BET:

An electrode sheet in the second region 115 of the positive electrode sheet 11 was taken, soaked in dimethyl carbonate DMC for 30 min, and then dried in a fume hood. The safety layer was scraped off with a scraper, and the conductive agent, the binder, and the leveling agent were burned off to obtain powder of inorganic insulation particles. A specific surface area BET (m²/g⁻¹) of the powder of inorganic insulation particles was tested using a nitrogen adsorption method.

### (2) Fully-charged resistance and variation coefficient:

(1) At 25°C, the lithium-ion battery was charged at a constant current of 0.05C to a designed fully-charged voltage of 4.45 V, and then charged at the constant designed fully-charged voltage to a current of 0.025C (cut-off current), so that the lithium-ion battery reached a fully charged state.
(2) The lithium-ion battery was disassembled to obtain a positive electrode sheet 11.
(3) The positive electrode sheet 11 obtained in step (2) was soaked in dimethyl carbonate DMC at 25°C for 1 h, dried in the fume hood, and then hermetically transferred to a resistance testing site.
(4) A BER1200 sheet resistance tester was used to test a resistance of a first region 114 of the positive electrode sheet 11 obtained in step (3) (a pressure head was placed on a first positive electrode active material layer 113 of the first region 114 of the positive electrode sheet 11). Adjacent test points were spaced apart by 2 mm to 3 mm. 20 different points were tested, resistances Ras of all test points were recorded, and an average of 20 Ras was calculated and recorded as R1, and then a standard deviation of 20 Ras was calculated and recorded as σa, with a variation coefficient δ1 = σa/R1.
(5) The BER1200 sheet resistance tester was used to test a resistance of a second region 115 of the positive electrode sheet 11 obtained in step (3) (the pressure head was placed on a second part 1122 of a first safety layer 112 in the second region 115 of the positive electrode sheet 11). Adjacent test points were spaced apart by 2 mm to 3 mm. 20 different points were tested, resistances Rbs of all test points were recorded, and an average of 20 Rbs was calculated and recorded as R2, and then a standard deviation of 20 Rbs was calculated and recorded as σb, with a variation coefficient δ2 = σb/R2.

Resistance testing parameters were as follows: the pressure head had an area of 153.94 mm², a pressure of 3.5 t, and a holding time of 50s.

### (3) Thickness of safety layer:

(1) The positive electrode sheet 11 was disassembled from the lithium-ion battery. (2) The positive electrode sheet 11 was baked at 80°C for 60 min. (3) The positive electrode sheet 11 in step (2) was taken, then plasma cutting was performed at a position of the positive electrode sheet 11 with a safety layer to obtain a cross section. (4) The cross section of the electrode sheet obtained in step (3) was observed under a scanning electron microscope (SEM), and the thickness of the first safety layer 112 was tested. Adjacent test points were spaced apart by 2 mm to 3 mm. 20 different points were tested. An average of all test points was recorded as the thickness D1 of the first safety layer 112. The thickness D2 of the second safety layer 116 was tested using the same method.

### (4) Diameter ϕ of uncoated spot:

The electrode sheet with the second region 115 coated with the first safety layer 112 was taken, uncoated spots were found under an optical microscope at 300x magnification, and the longest and shortest diameters of each uncoated spot were tested and recorded as ϕ1 and ϕ2. The diameter ϕ of the uncoated spot was = (ϕ1 + ϕ2)/2.

### (5) Side extrusion pass rate:

At 25°C, the lithium-ion battery under test was charged at a constant current of 0.05C to a designed fully-charged voltage of 4.45 V, and then charged at the constant designed fully-charged voltage to a current of 0.025C (cut-off current), so that the lithium-ion battery reached the fully charged state. The appearance of the lithium-ion battery before tested was recorded. In an environment at 25±3°C, side extrusion test was performed on the lithium-ion battery, where a diameter of a steel nail was 5 mm, and an extrusion speed was 150 mm/s. Extrusion was started from a side of the lithium-ion battery, and the test was stopped after the test was performed for 3 min or when a surface temperature of the lithium-ion battery dropped to 50°C. 20 lithium-ion batteries formed a group, the states of the lithium-ion batteries during the test were observed. If a lithium-ion battery undergone no combustion and no explosion, the lithium-ion battery passed the test. The side extrusion pass rate was recorded as the number of lithium-ion batteries passed the test/20.

### (6) Low-temperature performance:

(1) At 25°C, the lithium-ion battery was left standing for 60 min, charged at a constant current of 1.5C to a designed fully-charged voltage of 4.45 V, and then charged at the constant designed fully-charged voltage to a current of 0.025C (cut-off current), so that the lithium-ion battery reached the fully charged state.
(2) At 25°C, the lithium-ion battery in step (1) was discharged to 3.0 V at a constant current of 0.2C, and a discharge capacity at 25°C was recorded as C1.
(3) At 25°C, operations in step (1) were repeated, so that the lithium-ion battery reached the fully charged state.
(4) The lithium-ion battery in step (3) was left standing at -20°C for 60 min, and then discharged to 3.0 V at a constant current of 0.2C. A discharge capacity at -20°C was recorded as C2.
(5) Low-temperature performance = C2/C1 × 100%.

The parameters and performance of the lithium-ion battery are described below in detail in Table 4 and Table 5.

**Table 2 Parameters and performance of electrochemical apparatus**

| | Fully-charged resistance of first region | | Fully-charged resistance of second region | | R2/R1 | Number of uncoated spots in second region (ea·m⁻²) | | | C2/C1 | Side extrusion pass rate |
|---|---|---|---|---|---|---|---|---|---|---|
| | R1 (Ω/cm⁻²) | Variation coefficient δ1 | R2 (Ω/cm⁻²) | Variation coefficient δ2 | | 0.5 mm < ϕ ≤ 1.5 m | 1.5 mm < ϕ ≤ 2.5 mm | ϕ > 2.5 mm | | |
| Comparative example 1 | No safety layer | | | | | | | | 56% | 0% |
| Comparative example 2 | 40 | 18% | 32 | 14% | 80% | 35 | 13 | 8 | 35% | 40% |
| Comparative example 3 | 20 | 20% | 17 | 15% | 85% | 40 | 20 | 15 | 30% | 30% |
| Example 1 | 5 | 10% | 4 | 8% | 80% | 0 | 0 | 0 | 45% | 70% |
| Example 2 | 35 | 15% | 32 | 10% | 91% | 30 | 5 | 0 | 41% | 80% |
| Example 3 | 35 | 10% | 32 | 8% | 91% | 10 | 1 | 0 | 44% | 85% |
| Example 4 | 35 | 8% | 32 | 6% | 91% | 2 | 0 | 0 | 50% | 95% |
| Example 5 | 32 | 6% | 30 | 5% | 94% | 0 | 0 | 0 | 51% | 100% |
| Example 6 | 32 | 5% | 30 | 3% | 94% | 0 | 0 | 0 | 55% | 100% |
| Example 7 | 30 | 5% | 28 | 4% | 93% | 0 | 0 | 0 | 54% | 100% |
| Example 8 | 20 | 8% | 19 | 6% | 95% | 2 | 0 | 0 | 50% | 90% |
| Example 9 | 15 | 8% | 13 | 7% | 87% | 10 | 0 | 0 | 51% | 80% |
| Example 10 | 20 | 12% | 18 | 9% | 90% | 15 | 3 | 0 | 43% | 85% |
| Example 11 | 35 | 8% | 33 | 7% | 94% | 5 | 0 | 0 | 47% | 100% |
| Example 12 | 30 | 3% | 28 | 2% | 93% | 0 | 0 | 0 | 58% | 100% |
| Example 13 | 30 | 5% | 29 | 3% | 97% | 0 | 0 | 0 | 55% | 100% |
| Example 14 | 30 | 5% | 29 | 3% | 97% | 0 | 0 | 0 | 55% | 100% |
| Example 15 | 25 | 5% | 23 | 3% | 92% | 0 | 0 | 0 | 55% | 95% |
| Example 16 | 25 | 5% | 23 | 3% | 92% | 0 | 0 | 0 | 55% | 95% |
| Example 17 | 20 | 3% | 18 | 2% | 90% | 0 | 0 | 0 | 58% | 85% |
| Example 18 | 15 | 3% | 12 | 2% | 80% | 0 | 0 | 0 | 58% | 85% |
| Example 19 | 10 | 3% | 8 | 2% | 80% | 0 | 0 | 0 | 58% | 80% |
| Example 20 | 8 | 3% | 5 | 2% | 63% | 0 | 0 | 0 | 58% | 75% |
| Example 21 | 30 | 8% | 29 | 7% | 97% | 8 | 2 | 0 | 50% | 90% |
| Example 22 | 32 | 6% | 30 | 5% | 94% | 0 | 0 | 0 | 53% | 100% |
| Example 23 | 32 | 6% | 30 | 5% | 94% | 0 | 0 | 0 | 53% | 100% |
| Example 24 | 32 | 6% | 30 | 5% | 94% | 0 | 0 | 0 | 53% | 100% |

With reference to Table 1 and Table 2, it can be seen that the specific surface area and addition amount of the inorganic insulation particles, the type and addition amount of the binder, the type and addition amount of the leveling agent, the type and addition amount of the conductive agent, the thickness of the safety layer, and the like all affect the side extrusion pass rate and low-temperature performance of the lithium-ion battery.

Through extensive research, the inventors found that the reason is that the above characteristics jointly affect the average R1 and variation coefficient δ1 of the resistance in the first region 114 of the positive electrode sheet 11 when the lithium-ion battery is in the fully charged state at 25°C, also affect the average R2 and variation coefficient δ2 of the resistance in the second region 115 of the positive electrode sheet 11, and further affect the size and number of uncoated spots in the first safety layer 112, thus affecting the side extrusion pass rate and low-temperature performance of the lithium-ion battery.

It can be seen from Table 1 and Table 2 that a smaller variation coefficient δ1 of the resistance in the first region 114 and a smaller variation coefficient δ2 of the resistance in the second region 115 lead to a more significant improvement in the low-temperature performance of the lithium-ion battery (the value of C2/C1 gradually increases). In Examples 1 to 24, the low-temperature performance requirement of the lithium-ion battery can be met (the value of C2/C1 is large), and the lithium-ion battery can have excellent safety performance (high side extrusion pass rate).

From Comparative example 1 in Table 1 and Table 2, it can be seen that if the positive electrode sheet 11 is not provided with a safety layer, although the low-temperature performance of the lithium-ion battery can be met, the safety performance is poor.

From Comparative examples 2 and 3 in Table 1 and Table 2, it can be seen that in the fully charged state at 25°C, the variation coefficient δ1 of the resistance in the first region 114 and the variation coefficient δ2 of the resistance in the second region 115 are both large (δ1 > 15%, δ2 > 10%). Moreover, a large number of uncoated spots with large diameters are present in the first safety layer 112. The number of uncoated spots with diameters satisfying 0.5 mm ≤ ϕ ≤ 1.5 mm exceeds 30 per m², the number of uncoated spots with diameters satisfying 1.5 mm ≤ ϕ ≤ 2.5 mm exceeds 5 per m², and uncoated spots with diameters ϕ > 2.5 mm are present. This leads to poor low-temperature performance and safety performance of the lithium-ion battery.

As compared with Comparative examples 2 and 3, in Example 1, values of the variation coefficient δ1 of the resistance in the first region 114 and the variation coefficient δ2 of the resistance in the second region 115 are both smaller (δ1 = 10%, δ2 = 8%), and no uncoated spot with a large diameter is present, so that the low-temperature performance and safety performance of the lithium-ion battery can both be improved.

From comparison of Example 1 and Example 3, it can be seen that in each example, under a condition that the variation coefficient δ1 of the resistance in the first region 114 and the variation coefficient δ2 of the resistance in the second region 115 are the same (δ1 = 10%, δ2 = 8%), the average R1 (R1 ≥ 10 Ω) of the resistance in the first region 114 and the average R2 (R2 ≥ 8 Ω) of the resistance in the second region 115 are larger (Example 3), so that the safety performance of the lithium-ion battery can be further improved while the low-temperature performance of the lithium-ion battery can be maintained.

It should be noted that, without conflict, some embodiments and features in these embodiments in this application may be combined with each other. The described embodiments are merely some but not all of these embodiments of this application. The detailed description of these embodiments of this application is not intended to limit the scope of this application but merely to represent selected embodiments of this application. All other embodiments obtained by persons of ordinary skill in the art based on these embodiments of this application shall fall within the protection scope of this application.

## Claims

1. An electrochemical apparatus, comprising a positive electrode sheet, wherein the positive electrode sheet comprises a positive electrode current collector, a first safety layer, and a first positive electrode active material layer; the positive electrode sheet comprises a first region provided with the first positive electrode active material layer; the first safety layer comprises a first part located in the first region; and the first part is disposed between the positive electrode current collector and the first positive electrode active material layer; and
when the electrochemical apparatus is in a fully charged state at 25°C, a variation coefficient δ1 of a resistance R in the first region of the positive electrode sheet is ≤ 15%.

2. The electrochemical apparatus according to claim 1, wherein when the electrochemical apparatus is in the fully charged state at 25°C, an average resistance R1 in the first region of the positive electrode sheet satisfies: 8 Ω/cm² ≤ R1 ≤ 100 Ω/cm².

3. The electrochemical apparatus according to claim 1, wherein the positive electrode sheet further comprises a second region not provided with the first positive electrode active material layer; the first safety layer comprises a second part located in the second region; and when the electrochemical apparatus is in the fully charged state at 25°C, a variation coefficient δ2 of a resistance R in the second region of the positive electrode sheet is ≤ 10%.

4. The electrochemical apparatus according to claim 3, wherein when the electrochemical apparatus is in the fully charged state at 25°C, an average resistance R2 in the second region of the positive electrode sheet satisfies: 5 Ω/cm² ≤ R2 ≤ 100 Ω/cm².

5. The electrochemical apparatus according to claim 3, wherein the electrochemical apparatus satisfies at least one of the following conditions:
(a) when the electrochemical apparatus is in the fully charged state at 25°C, the average resistance R1 in the first region of the positive electrode sheet and the average resistance R2 in the second region of the positive electrode sheet satisfy: R2/R1 ≥ 60%; or
(b) the positive electrode sheet further comprises a second safety layer and a second positive electrode active material layer, wherein the second safety layer comprises a third part located in the first region and a fourth part located in the second region; the second positive electrode active material layer comprises a fifth part located in the first region and a sixth part located in the second region; the third part is disposed between the positive electrode current collector and the fifth part; and the fourth part is disposed between the positive electrode current collector and the sixth part.

6. The electrochemical apparatus according to claim 5, wherein the electrochemical apparatus satisfies at least one of the following conditions:
(c) a thickness of the first safety layer is 0.5 µm to 10 µm; or
(d) a thickness of the second safety layer is 0.5 µm to 10 µm.

7. The electrochemical apparatus according to claim 3, wherein a diameter of an uncoated spot in the second part is ϕ; the number of uncoated spots with diameters satisfying 0.5 mm ≤ ϕ ≤ 1.5 mm does not exceed 30 per m²; the number of uncoated spots with diameters satisfying 1.5 mm < ϕ ≤ 2.5 mm does not exceed 5 per m²; and no uncoated spot with a diameter ϕ > 2.5 mm is present.

8. The electrochemical apparatus according to claim 5, wherein a material of the first safety layer comprises first inorganic insulation particles, a first conductive agent, a first binder, and an optional first leveling agent; a material of the second safety layer comprises second inorganic insulation particles, a second conductive agent, a second binder, and an optional second leveling agent; and the electrochemical apparatus satisfies at least one of the following conditions:
(e) a specific surface area of the first inorganic insulation particles is 1 m²/g to 50 m²/g;
(f) a specific surface area of the second inorganic insulation particles is 1 m²/g to 50 m²/g;
(g) based on a mass of the first safety layer, a mass percentage of the first inorganic insulation particles is 65% to 98.9%, a mass percentage of the first binder is 1% to 20%, a mass percentage of the first conductive agent is 0.1% to 10%, and a mass percentage of the first leveling agent is 0% to 5%; or
(h) based on a mass of the second safety layer, a mass percentage of the second inorganic insulation particles is 65% to 98.9%, a mass percentage of the second binder is 1% to 20%, a mass percentage of the second conductive agent is 0.1% to 10%, and a mass percentage of the second leveling agent is 0% to 5%.

9. The electrochemical apparatus according to claim 8, wherein the electrochemical apparatus satisfies at least one of the following conditions:
(i) the first binder and/or the second binder each independently comprises at least one of an olefin polymer, an acrylic polymer, an amide polymer, a fluoroolefin polymer, a carboxymethyl cellulose salt, or rubber;
(j) the first inorganic insulation particles and/or the second inorganic insulation particles each independently comprises at least one of boehmite, aluminum oxide, titanium oxide, silicon oxide, magnesium oxide, hafnium oxide, tin oxide, cerium oxide, nickel oxide, zinc oxide, calcium oxide, zirconium oxide, yttrium oxide, aluminum hydroxide, magnesium hydroxide, calcium hydroxide, barium sulfate, calcium sulfate, calcium silicate, or silicon carbide;
(k) the first conductive agent and/or the second conductive agent each independently comprises at least one of a particulate conductive agent, a lamellar conductive agent, a reticular conductive agent, or a fibrous conductive agent; or
(l) the first leveling agent and/or the second leveling agent each independently comprises at least one of an olefin derivative polymer, an acrylate salt polymer, a siloxane polymer, an acrylate ester polymer, an alcohol compound, an ether compound, or a fluorocarbon compound.

10. An electric device, comprising the electrochemical apparatus according to any one of claims 1 to 9.
